# EUROPEAN PATENT APPLICATION

(11) **EP 4 722 034 A1**
(43) Date of publication of application: **08.04.2026**
(21) Application number: 23938079.3
(22) Date of filing: 25.06.2023
(51) Int. Cl.: B60N 2/22

(54) **ROTATING MECHANISM HAVING SELF-LOCKING FUNCTION**

(30) Priority: 24.05.2023 CN 202310592841
(71) Applicant: Keiper (Changshu) Seating Mechanisms Co., Ltd., Suzhou, Jiangsu 215500 (CN)
(72) Inventor: XU, Junqi, Suzhou, Jiangsu 215500 (CN); ZHANG, Chengfei, Suzhou, Jiangsu 215500 (CN); LIU, Xingshang, Suzhou, Jiangsu 215500 (CN); SUN, Peijing, Suzhou, Jiangsu 215500 (CN); CHANG, Jian, Suzhou, Jiangsu 215500 (CN)
(74) Representative: Hauck Patent- und Rechtsanwälte PartmbB
(86) International application number: PCT/CN2023/102074
(87) International publication number: WO 2024/239410

(57) **Abstract**

The present invention relates to a rotating mechanism having a self-locking function, wherein a driving gear sleeves on a shaft so as to be driven by a driving mechanism in a forward direction, a driven gear sleeves on the shaft and is driven by the driving gear, the torsion spring includes a winding part, a first spring arm and a second spring arm, the winding part is wound on the shaft, the first spring arm extends outwards in a radial direction from a top end of the winding part and is clamped between the driven gear and the driving gear, the second spring arm extends outwards in a radial direction from a bottom end of the winding part and is clamped between the driven gear and the driving gear, wherein the driving gear acts on the torsion spring to bring it in an unlocked state when the driving gear is driven in the forward direction, and the driven gear acts on the torsion spring to bring it in a locked state when the driven gear is driven in the reverse direction. The rotating mechanism having a self-locking function according to the present invention has an independent self-locking structure, whose self-locking capability may be changed only by means of adjusting the design of the torsion spring, so that the transmission performance stage and the self-locking capability are not bound to each other, and therefore a more efficient design can be applied with respect to the design of a gear transmission system.

## Description

### TECHNICAL FIELD

The present invention relates to an automobile seat, and more particularly to a rotating mechanism having a self-locking function.

### BACKGROUND

Many electric seat backrest adjustments known in the prior art are not self-locking, and backrest recliners are not completely self-locking under bumpy working conditions.

The traditional self-locking stage may be part of the transmission stage, so that a certain degree of self-locking is obtained by sacrificing efficiency, for example, worm+helical gear/turbine, planetary transmission with small tooth difference and other structures.

### SUMMARY

In order to solve the above-described problem that the self-locking stage should sacrifice efficiency in the prior art, the present invention provides a rotating mechanism having a self-locking function.

The rotating mechanism having a self-locking function according to the present invention comprises a driven gear, a torsion spring, a driving gear and a shaft, the driving gear sleeves on the shaft so as to be driven by a driving mechanism in a forward direction, the driven gear sleeves on the shaft and is driven by the driving gear, the torsion spring includes a winding part, a first spring arm and a second spring arm, the winding part is wound on the shaft, the first spring arm extends outwards in a radial direction from a top end of the winding part and is clamped between the driven gear and the driving gear, the second spring arm extends outwards in a radial direction from a bottom end of the winding part and is clamped between the driven gear and the driving gear, wherein the driving gear acts on the torsion spring to bring it in an unlocked state when the driving gear is driven in the forward direction, and the driven gear acts on the torsion spring to bring it in a locked state when the driven gear is driven in the reverse direction.

Preferably, the driving gear has a first abutment wall, and when the driving gear is driven in the forward direction so as to rotate counterclockwise, the first abutment wall acts on the first spring arm so that a winding force of the torsion spring on the shaft remains to be zero or becomes smaller.

Preferably, the driving gear has a second abutment wall spaced apart from the first abutment wall, and when the driving gear is driven in the forward direction so as to rotate clockwise, the second abutment wall acts on the second spring arm so that the winding force of the torsion spring on the shaft remains to be zero or becomes smaller.

Preferably, the driven gear has a first action wall, and when the driven gear is driven in the reverse direction so as to rotate counterclockwise, the first action wall acts on the first spring arm so that a winding force of the torsion spring on the shaft is generated or a winding force of the torsion spring on the shaft becomes larger.

Preferably, the driven gear has a second action wall spaced apart from the first action wall, and when the driven gear is driven in the reverse direction so as to rotate clockwise, the second action wall acts on the second spring arm so that the winding force of the torsion spring on the shaft is generated or the winding force of the torsion spring on the shaft becomes larger.

Preferably, the rotating mechanism further comprises a wear-resistant bushing as a friction part clamped between the shaft and the winding part.

Preferably, the wear-resistant bushing has a rough outer wall for acting on the winding part and a smooth inner wall for acting on the shaft.

Preferably, the rotating mechanism further comprises a cover plate and a housing which are fixedly connected in a first direction in a snap-fit manner, and the shaft extends in the first direction with both ends thereof rotatably supported on the cover plate and the housing.

Preferably, the rotating mechanism further comprises output teeth with both axial ends thereof rotatably supported on the cover plate and the housing, and the output teeth are meshed with the driven gear so as to be driven by the driven gear.

Preferably, the rotating mechanism further comprises a worm and an electric motor as the driving mechanism, the electric motor is fixedly connected to the housing in a second direction perpendicular to the first direction, the worm is mounted on an output shaft of the electric motor so as to be driven to rotate by the electric motor, and the worm is meshed with the driving gear so as to drive the driving gear.

According to the rotating mechanism having a self-locking function of the present invention, wherein the driving gear acts on the torsion spring to bring it in an unlocked state when the driving gear is driven in the forward direction; the driven gear acts on the torsion spring to bring it in a locked state when the driven gear is driven in the reverse direction; the rotating mechanism has an independent self-locking structure, whose self-locking capability may be changed only by means of adjusting the design of the torsion spring, so that the transmission performance stage and the self-locking capability are not bound to each other, and therefore a more efficient design can be applied with respect to the design of a gear transmission system.

### BRIEF DESCRIPTION OF THE DRAWINGS

Fig. 1 is an overall assembly drawing of a rotating mechanism having a self-locking function according to one preferred embodiment of the present invention.
Fig. 2 is an exploded view of Fig. 1.
Fig. 3 is a sectional view of Fig. 1.
Fig. 4 is an assembly schematic view of the torsion spring, the wear-resistant bushing and the shaft in Fig. 2.
Fig. 5 is an assembly schematic view of the torsion spring and the driving gear in Fig. 2.
Fig. 6 is an assembly schematic view of the torsion spring and the driven gear in Fig. 2.

### DETAILED DESCRIPTION

Preferred embodiments of the present invention will be given below and described in detail in conjunction with the accompanying drawings.

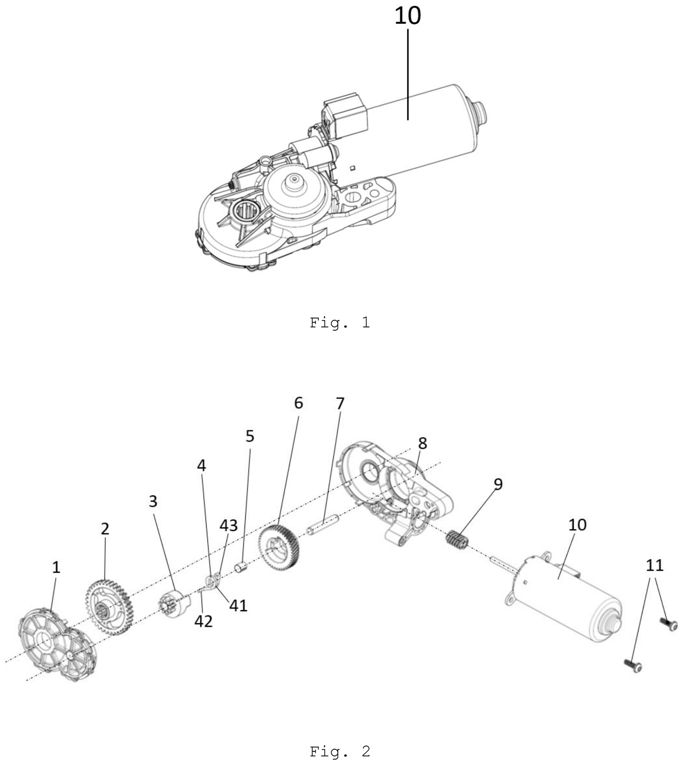

As shown in Figs. 1 to 3, the rotating mechanism having a self-locking function according to one preferred embodiment of the present invention comprises a cover plate 1 and a housing 8 which are fixedly connected in a first direction in a snap-fit manner.

The rotating mechanism further comprises a worm 9 and an electric motor 10, wherein the electric motor 10 is fixedly connected to the housing 8 in a second direction perpendicular to the first direction through two self-tapping screws 11, and the worm 9 is mounted on an output shaft of the electric motor 10 so as to be driven to rotate by the electric motor 10.

The rotating mechanism further comprises a driven gear 3, a driving gear 6 and a shaft 7, wherein the shaft 7 extends in the first direction with both ends thereof rotatably supported on the cover plate 1 and the housing 8; the driving gear 6 sleeves on the shaft 7 and is meshed with the worm 9 so as to be driven by the worm 9; and the driven gear 3 sleeves on the shaft 7 and is driven by the driving gear 6. In this embodiment, the driven gear 3 is a pinion, and the driving gear 6 is a helical gear.

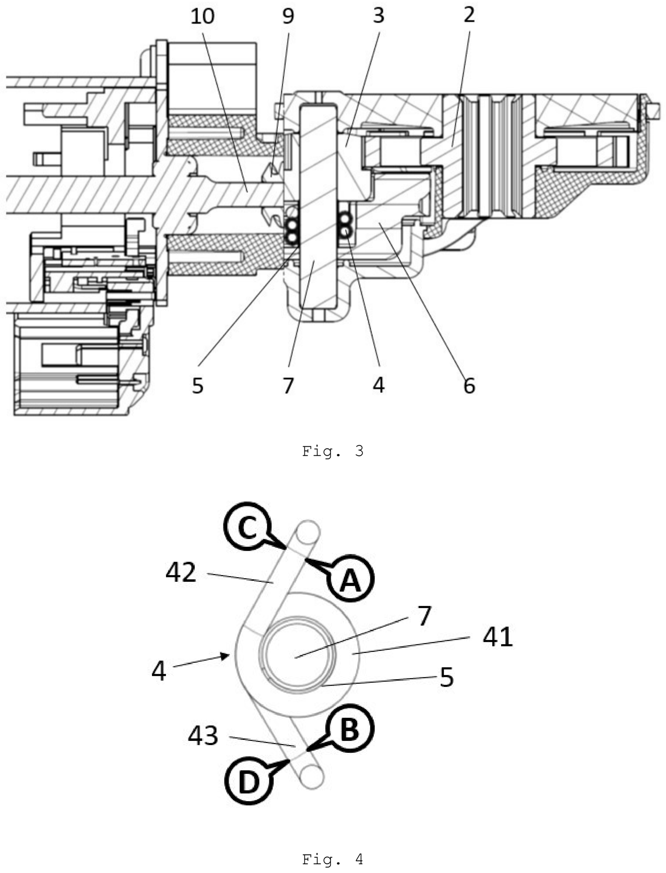

In particular, the rotating mechanism further comprises a torsion spring 4 and a wear-resistant bushing 5. Referring to Fig. 4, the torsion spring 4 includes a winding part 41, a first spring arm 42 and a second spring arm 43 that are integrally formed, wherein the winding part 41 is wound on the wear-resistant bushing 5 and the shaft 7, the first spring arm 42 extends outwards in a radial direction from a top end of the winding part 41 and is clamped between the driven gear 3 and the driving gear 6, and the second spring arm 43 extends outwards in a radial direction from a bottom end of the winding part 41 and is clamped between the driven gear 3 and the driving gear 6.

The rotating mechanism further comprises output teeth 2 with both axial ends thereof rotatably supported on the cover plate 1 and the housing 8, and the output teeth 2 are meshed with the driven gear 3 so as to be driven by the driven gear 3.

The operating principle of the rotating mechanism having a self-locking function according to the present invention will be briefly described below.

The output shaft of the electric motor 10 drives the worm 9 to rotate, the worm 9 drives the driving gear 6 to rotate, the driving gear 6 drives the torsion spring 4 to rotate about the shaft 7, and the torsion spring 4 also drives the driven gear 3 and the wear-resistant bushing 5 to rotate together synchronously, so that the wear-resistant bushing 5 is in rotary sliding friction with the shaft 7, and at the same time, the driven gear 3 drives the output teeth 2 to rotate and output a rotational speed and a torque.

The working principle of the torsion spring 4 of the rotating mechanism having a self-locking function according to the present invention will be briefly described below.

As shown in Fig. 4, when the first spring arm 42 of the torsion spring 4 is subjected to a force in the direction of arrow A and/or the second spring arm 43 is subjected to a force in the direction of arrow B, the torsion spring 4 tends to unwind and loosen, and a winding force of the torsion spring 4 on the wear-resistant bushing 5 or the shaft 7 becomes smaller. If rotation occurs at this time, the torque will also decrease correspondingly.

On the contrary, when the first spring arm 42 of the torsion spring 4 is subjected to a force in the direction of arrow C, and/or the second spring arm 43 is subjected to a force in the direction of arrow D, the torsion spring 4 tends to wind and tighten, and the winding force of the torsion spring 4 on the wear-resistant bushing 5 or the shaft 7 becomes larger. If rotation occurs at this time, the torque will also increase correspondingly. The wear-resistant bushing 5 has a rough outer wall and a smooth inner wall. When subjected to a torque for a long period, the wear-resistant bushing 5 is stationary relative to the torsion spring 4, but in sliding friction with the shaft 7. In addition, the inner surface of the wear-resistant bushing 5 has a high hardness, so that the service life of the torsion spring 4 may be prolonged.

A forward drive unlocking principle of the rotating mechanism having a self-locking function according to the present invention will be briefly described below.

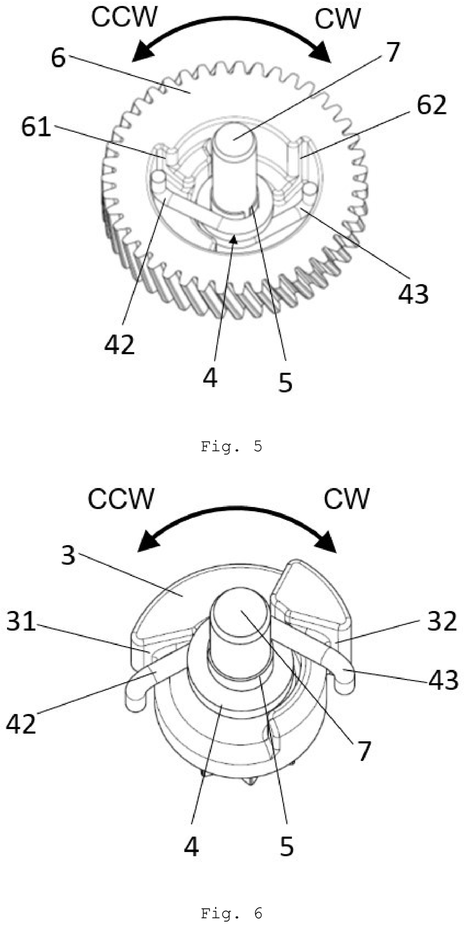

As shown in Fig. 5, the driving gear 6 has a first abutment wall 61 and a second abutment wall 62 spaced apart from each other. When the driving gear 6 is driven by the electric motor 10 and the worm 9 to rotate counterclockwise in the CCW direction, the first abutment wall 61 of the driving gear 6 acts on the first spring arm 42 of the torsion spring 4 in the direction of arrow A (see Fig. 4) and drives the same to rotate, and the winding force of the torsion spring 4 on the wear-resistant bushing 5 or the shaft 7 becomes smaller. When the driving gear 6 is driven by the electric motor 10 and the worm 9 to rotate clockwise in the CW direction, the second abutment wall 62 of the driving gear 6 acts on the second spring arm 43 of the torsion spring 4 in the direction of arrow B (see Fig. 4) and drives the same to rotate, and the winding force of the torsion spring 4 on the wear-resistant bushing 5 or the shaft 7 also becomes smaller.

The inside diameter of the winding part 41 of the torsion spring 4 is greater than the outside diameter of the shaft 7 or the wear-resistant bushing 5, and the winding part 41 is in interference fit with the wear-resistant bushing 5 or the shaft 7. At this time, when the driving gear 6 is driven by the electric motor 10 and the worm 9 to rotate counterclockwise, the first abutment wall 61 of the driving gear 6 acts on the first spring arm 42 of the torsion spring 4 in the direction of arrow A (see Fig. 4) and drives the same to rotate, so that the inside diameter of the winding part 41 of the torsion spring 4 increases, and the winding force of the torsion spring 4 on the wear-resistant bushing 5 or the shaft 7 remains to be zero. When the driving gear 6 is driven by the electric motor 10 and the worm 9 to rotate clockwise in the CW direction, the second abutment wall 62 of the driving gear 6 acts on the second spring arm 43 of the torsion spring 4 in the direction of arrow B (see Fig. 4) and drives the same to rotate, so that the inside diameter of the winding part 41 of the torsion spring 4 increases, and the winding force of the torsion spring 4 on the wear-resistant bushing 5 or the shaft 7 also remains to be zero.

When a forward driving of the driving gear 6 is finally realized, bidirectional rotations are both in an unlocked state, and the system of a rotating mechanism having a self-locking function itself may output a rotational speed and a torque by normal rotating operation of the output teeth 2.

A reverse drive locking principle of the rotating mechanism having a self-locking function according to the present invention will be briefly described below.

As shown in Fig. 6, the driven gear 3 has a first action wall 31 and a second action wall 32 spaced apart from each other. When an external force attempts to drive the driven gear 3 reversely through the output teeth 2 so that the driven gear 3 rotates counterclockwise in the CCW direction, the first action wall 31 of the driven gear 3 acts on the first spring arm 42 of the torsion spring 4 in the direction of arrow C (see Fig. 4) and drives the same to rotate, so that the winding force of the torsion spring 4 on the wear-resistant bushing 5 or the shaft 7 becomes larger. When an external force attempts to drive the driven gear 3 reversely through the output teeth 2 so that the driven gear 3 rotates clockwise in the CW direction, the second action wall 32 of the driven gear 3 acts on the second spring arm 43 of the torsion spring 4 in the direction of arrow D (see Fig. 4) and drives the same to rotate, so that the winding force of the torsion spring 4 on the wear-resistant bushing 5 or the shaft 7 also becomes larger.

The inside diameter of the winding part 41 of the torsion spring 4 is greater than the outside diameter of the shaft 7 or the wear-resistant bushing 5, and the winding part 41 is in interference fit with the wear-resistant bushing 5 or the shaft 7. At this time, when an external force attempts to drive the driven gear 3 reversely through the output teeth 2 so that the driven gear 3 rotates counterclockwise in the CCW direction, the first action wall 31 of the driven gear 3 acts on the first spring arm 42 of the torsion spring 4 in the direction of arrow C (see Fig. 4) and drives the same to rotate, so that the inside diameter of the winding part 41 of the torsion spring 4 decreases, and the winding force of the torsion spring 4 on the wear-resistant bushing 5 or the shaft 7 is generated. When an external force attempts to drive the driven gear 3 reversely through the output teeth 2 so that the driven gear 3 rotates clockwise in the CW direction, the second action wall 32 of the driven gear 3 acts on the second spring arm 43 of the torsion spring 4 in the direction of arrow D (see Fig. 4) and drives the same to rotate, so that the inside diameter of the winding part 41 of the torsion spring 4 decreases, and the winding force of the torsion spring 4 on the wear-resistant bushing 5 or the shaft 7 is generated.

When the reverse driving of the driven gear 3 is finally realized, bidirectional rotations are both in a locked state, and the system of a rotating mechanism having a self-locking function itself may prevent the rotation and remain stationary.

Apparently, the rotating mechanism having a self-locking function according to the present invention has an independent self-locking structure, whose self-locking capability may be changed only by means of adjusting the design of the torsion spring 4, so that the transmission performance stage and the self-locking capability are not bound to each other, and therefore a more efficient design can be applied with respect to the design of a gear transmission system. Moreover, the overall design of the mechanism has higher transmission efficiency than a traditional backrest adjustment mechanism, which may greatly reduce the power demand of the system for the electric motor and lessen the cost. In addition, the self-locking structure is optionally used, which may be implemented by mounting/not mounting the torsion spring, and the Platformizing/gradating of the product is easily implemented.

In general, the rotating mechanism having a self-locking function according to the present invention may be used in application scenarios that require electric rotary output and present self-locking requirements, for example, electric seat backrest adjustment, electric seat armrest adjustment, electric unlocking mechanism and the like. In particular, when adjustment is not made, the rotating mechanism having a self-locking function according to the present invention still has a self-locking capability and is difficult to be driven reversely. During the use in the electric seat backrest adjustment, it is possible to compensate a self-locking capability of the recliner so as to ensure that the seat backrest system is still self-locking in the case of bumpy road surface.

The above-described content which is only a preferred embodiment of the present invention, is not used to limit the scope of the present invention, and various changes may be made to the above-described embodiments of the present invention. That is, any simple and equivalent change and modification made to the content of the claims and specification according to the present application for invention fall within the protection scope of the claims of the present patent for invention. Whatever has not been described in detail in the present invention is conventional technical content.

## Claims

1. A rotating mechanism having a self-locking function, **characterized in that** the rotating mechanism comprises a driven gear, a torsion spring, a driving gear and a shaft, the driving gear sleeves on the shaft so as to be driven by a driving mechanism in a forward direction, and the driven gear sleeves on the shaft and is driven by the driving gear, the torsion spring includes a winding part, a first spring arm and a second spring arm, the winding part is wound on the shaft, the first spring arm extends outwards in a radial direction from a top end of the winding part and is clamped between the driven gear and the driving gear, the second spring arm extends outwards in a radial direction from a bottom end of the winding part and is clamped between the driven gear and the driving gear, wherein the driving gear acts on the torsion spring to bring it in an unlocked state when the driving gear is driven in the forward direction, and the driven gear acts on the torsion spring to bring it in a locked state when the driven gear is driven in the reverse direction.

2. The rotating mechanism according to claim 1, **characterized in that** the driving gear has a first abutment wall, and when the driving gear is driven in the forward direction so as to rotate counterclockwise, the first abutment wall acts on the first spring arm so that a winding force of the torsion spring on the shaft remains to be zero or becomes smaller.

3. The rotating mechanism according to claim 2, **characterized in that** the driving gear has a second abutment wall spaced apart from the first abutment wall, and when the driving gear is driven in the forward direction so as to rotate clockwise, the second abutment wall acts on the second spring arm so that the winding force of the torsion spring on the shaft remains to be zero or becomes smaller.

4. The rotating mechanism according to claim 1, **characterized in that** the driven gear has a first action wall, and when the driven gear is driven in the reverse direction so as to rotate counterclockwise, the first action wall acts on the first spring arm so that a winding force of the torsion spring on the shaft is generated or a winding force of the torsion spring on the shaft becomes larger.

5. The rotating mechanism according to claim 4, **characterized in that** the driven gear has a second action wall spaced apart from the first action wall, and when the driven gear is driven in the reverse direction so as to rotate clockwise, the second action wall acts on the second spring arm so that the winding force of the torsion spring on the shaft is generated or the winding force of the torsion spring on the shaft becomes larger.

6. The rotating mechanism according to claim 1, **characterized in that** the rotating mechanism further comprises a wear-resistant bushing as a friction part clamped between the shaft and the winding part.

7. The rotating mechanism according to claim 6, **characterized in that** the wear-resistant bushing has a rough outer wall for acting on the winding part and a smooth inner wall for acting on the shaft.

8. The rotating mechanism according to claim 1, **characterized in that** the rotating mechanism further comprises a cover plate and a housing which are fixedly connected in a first direction in a snap-fit manner, and the shaft extends in the first direction with both ends thereof rotatably supported on the cover plate and the housing.

9. The rotating mechanism according to claim 8, **characterized in that** the rotating mechanism further comprises output teeth with both axial ends thereof rotatably supported on the cover plate and the housing, and the output teeth are meshed with the driven gear so as to be driven by the driven gear.

10. The rotating mechanism according to claim 8, **characterized in that** the rotating mechanism further comprises a worm and an electric motor as the driving mechanism, the electric motor is fixedly connected to the housing in a second direction perpendicular to the first direction, the worm is mounted on an output shaft of the electric motor so as to be driven to rotate by the electric motor, and the worm is meshed with the driving gear so as to drive the driving gear.
